# EUROPEAN PATENT SPECIFICATION

(11) **EP 4 611 178 B1**
(45) Date of publication and mention of the grant of the patent: **24.06.2026**
(21) Application number: 24160343.0
(22) Date of filing: 28.02.2024
(51) Int. Cl.: H01R 11/01, B60L 53/302, H01M 50/528, H01R 13/405, B60R 16/00, B60L 1/00, H01M 50/502, H01R 4/34, H01R 11/26

(54) **ELECTRICAL CONNECTOR**
ELEKTRISCHER VERBINDER
CONNECTEUR ÉLECTRIQUE

(43) Date of publication of application: 03.09.2025
(73) Proprietor: Aptiv Technologies AG, 8200 Schaffhausen (CH)
(72) Inventor: CORDIER, Quentin, 28230 Epernon (FR); BOSSUYT, Sylvain, 28230 Epernon (FR); CHAUVEAU, Pascal, 28230 Epernon (FR)
(74) Representative: INNOV-GROUP

(56) References cited:
- EP-A1- 4 089 849
- TW-B- I 590 545
- US-A1- 2019 305 471
- US-A1- 2021 044 053

## Description

The invention relates to a busbar for an electrical connector. The invention also relates to an electrical connector as well as to a vehicle comprising such an electrical connector.

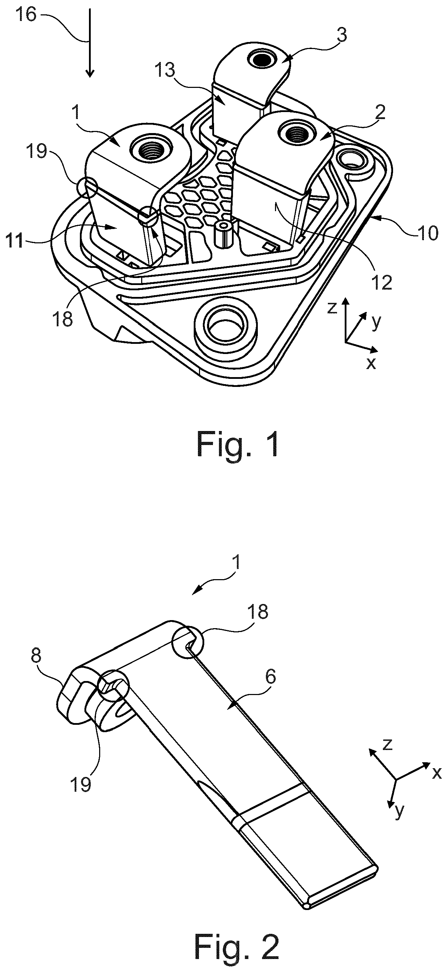

High power electrical connector, such as those used in electrical vehicles, may be required to conduct 90 kilowatts or more of electrical power. Accordingly, they comprises a set of busbars able to transmit high electrical power. Such an electrical connector, known by the inventors, is illustrated in figures 1 and 2. In the known electrical connector, the connector comprises three busbar 1, 2 and 3 identical to each other. Busbar 1 comprises :
- a straight portion 6 having a nearly constant rectangular cross section, and
- a mounting end 8 integrally formed with straight portion 6.

Mounting end 8 is intended to be electrically and mechanically connected to another electrical conductor like another busbar.

The electrical connector also comprises a plastic connector frame 10 having, for each busbar 1 to 3, a corresponding rectangular housing, respectively, 11, 12 and 13. In frame 10, the housing 11 to 13 are identical. Housing 11 extends in an insertion direction 16 which is shown by an arrow in figure 1. Housing 11 has a constant cross section in the insertion direction that matches the cross section of straight portion 6 to receive and immobilize busbar 1 in frame 10 in directions perpendicular to the insertion direction. The cross section of housing 11 is also configured to allow the insertion of straight portion 6 into housing 11 by sliding straight portion 6 in insertion direction 16.

Mounting end 8 has a rectangular cross section which is wider than the width of straight portion 6 in order to form two side abutments 18, 19. The abutments 18, 19 stop the insertion of straight portion 6 into rectangular housing 11 at the right position.

Abutments 18, 19 are integrally formed with busbar 1. Thus, they are simple to manufacture because there is no need to use an additional material to manufacture them. Accordingly, the cost of busbar 1-3 and the cost of the connector are reduced. Furthermore document US2019/305471A1 discloses a busbar formed with engagement portions, a ring-shaped O-ring attached to the busbar main body, and a holder that captures the busbar by interacting with the engagement portions to minimize play in the connection. Document US2021/044053A1 discloses a connector capable of suppressing an increase in size while securing an insulation distance between adjacent conductors, where the conductors are integrally molded in the insulation body. Document TWI590545B discloses an electrical connector and provides a technique for preventing an external force from acting on a housing of the electrical connector to cause the housing to be detached from the connector and to lose electrical connection, by employing a positive locking shape on the contact.

However, it is still desirable to further reduce the manufacturing cost of the connector.

Accordingly, the invention aims at reducing the manufacturing cost of such a connector.

The invention is exposed in the enclosed set of claims.

The present invention will now be described, by way of example, with reference to the accompanying drawings, in which:
- Fig. 1 is a perspective view of the plastic frame of a known electrical connector,
- Fig. 2 is a perspective view of the busbar of the known electrical connector of Fig. 1,
- Fig. 3 is schematic and partial view of a vehicle comprising an electrical connector,
- Fig. 4 is a perspective view of a plastic frame of the electrical connector of the vehicle of Fig. 3,
- Fig. 5 is a partial vertical section of the electrical connector of Fig. 4 showing a busbar;
- Fig. 6 is a perspective view of the busbar shown in Fig. 5,
- Fig. 7 is a partial perspective view of a housing of the plastic frame of Fig. 4,
- Fig. 8 is an enlarged view of one end of the busbar of Fig. 6, and
- Fig. 9 is a perspective view of another possible embodiment of the busbar of Fig. 6.

In this specification, the terminology, conventions and definitions of the terms used in this text are introduced in Chapter I. Then, detailed examples of embodiments are described in Chapter II with reference to the figures. In Chapter III, variants of these embodiments are presented. Finally, the advantages of the various embodiments are described in Chapter IV.

### Chapter I : Definitions, terminologies and conventions :

In the figures, the same reference is used to designate the same element in each figure.

In the following detailed description, numerous specific details are set forth in order to provide a thorough understanding of the various described embodiments. However, it will be apparent to one of ordinary skill in the art that the various described embodiments may be practiced without all of these specific details. In other instances, well-known methods, procedures, components, circuits, and networks have not been described in detail so as not to unnecessarily obscure aspects of the embodiments.

An electrically conductive material is a material whose electrical conductivity at 20°C is greater than 10⁴ S/m or 10⁶ S/m.

An electrically insulating material is one whose electrical conductivity, at 20°C, is less than 10⁻¹⁰ S/m or 10⁻¹⁴ S/m.

In this text, a high electrical power is an electrical power greater than 50 kW or 90 kW.

The expression "an element made of material A" or the expression "an element in material A" means that material A represents 90% or 95% of the mass of this element.

### Chapter II : Examples of embodiments

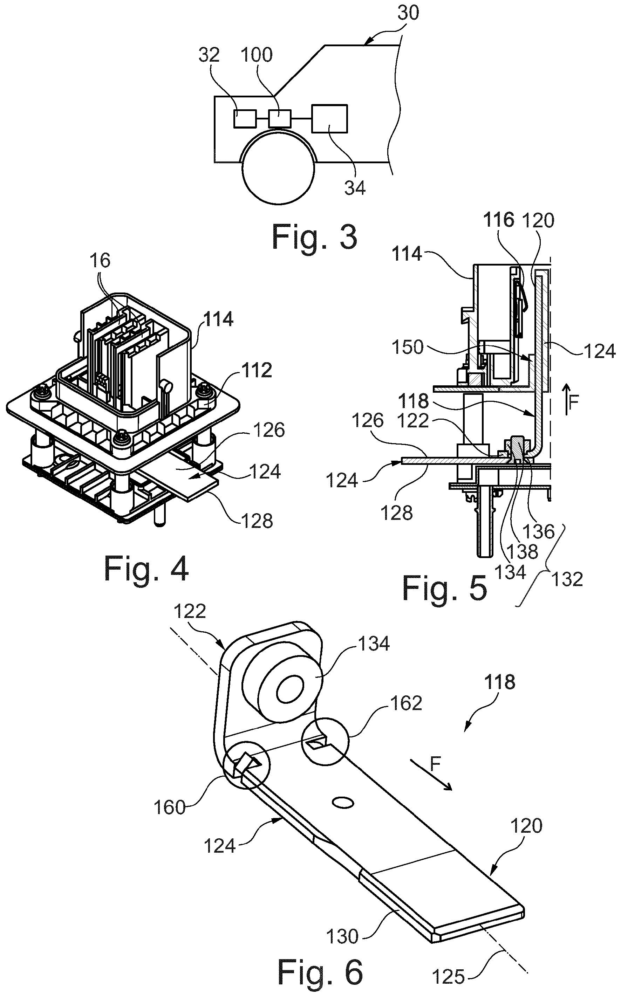

Fig. 3 shows a vehicle 30, like a car or a truck, equipped with a battery pack 32 and electrical appliances 34 powered by battery pack 32. For example, the electrical appliances 34 comprises the electrical traction motor of vehicle 30. The electrical appliances 34 are electrically connected to battery pack 32 though an electrical connector 100 able to support current with high electrical power. For example, connector 100 is designed to support current greater than 100 A or 200 A or more without any damage.

A non-limiting example of an embodiment of an electrical connector 100 is illustrated in Figs. 4-5 and a few elements of connector 100 are illustrated in more details in Fig. 6-8.

Typically, connector 100 is a header type connector that is designed to be mounted on a planar surface, such as a panel of the battery pack 32 or a bulkhead of an electric vehicle.

For example, connector 100 is similar to the one disclosed in the application EP4089849A1 except that it may be deprived of means for reducing a temperature of the connector 100 or may incorporates means for reducing the temperature of the connector 100 different from the one disclosed in application EP4089849A1. Accordingly, only the elements of connector 100 necessary to understand the invention are described.

The connector 100 includes a connector frame 112 defining a shroud 114 which partially surrounds electrical terminals 116. Frame 112 is entirely made of electrically insulating material. Herein, frame 112 is made of plastic. In this example, the electrical terminals 116 are female terminals that are configured to receive corresponding male terminals. As shown in Fig. 5, each electrical terminal 116 is connected to a respective busbar 118 that are partially disposed within the connector frame 112. In Fig. 5, only one busbar 118 is shown. The other busbars of connector 100 are similar or identical to busbar 118.

As more clearly visible on Fig. 6, busbar 118 comprises a connection end 120, a mounted end 122 and a straight portion 124. Ends 120, 122 and portion 124 are integrally formed in the same electrically conductive material. For example, the electrically conductive material is copper. "integrally formed" means that a material of the straight portion 124 continuously transitions to the ends 120, 122. Thus, no material boundary exists between the ends 120, 122 and the straight portion 124. Hence, the ends 120, 122 may not be explicitly differentiated from the straight portion 124.

The cross section of ends 120, 122 and portion 124 are substantially constant and rectangular. More precisely, the cross section of ends 120, 122 and portion 124 have the same width and the same thickness. Generally, the thickness of busbar 118 is comprised between 1 mm and 6 mm. The width of busbar 118 is generally comprised between 10 mm and 50 mm. Since the cross section of ends 120, 122 and portion 124 is rectangular, each of these parts of busbar 118 defines two opposed planar front faces and two opposed side faces. The front faces are major faces while the side faces are minor faces. As used herein, the major face is distinguished from the minor face due to the larger surface area of the major face. The width of each front face is equal to the width of the rectangular cross section and the width of each side face is equal to the thickness of the rectangular cross section.

In this embodiment, busbar 118 is a L-shaped busbar. As used herein "L-shaped" means that the planar end 122 is arranged perpendicularly to the planar end 120 and to the planar portion 124.

Herein, end 120 mainly extends along a longitudinal axis 125 and end 122 mainly extend in a direction perpendicular to axis 125.

In the illustrated example, the end 120 of busbars 118 is mechanically and electrically directly connected to the electrical terminal 116. When a removable plug comprising the male terminals is inserted into connector 100, each male terminal bears against a respective end 120 to establish the electrical connection. Reversely, when the plug is removed from connector 100, each male terminal slides along the respective ends 120 until each male terminal is mechanically and electrically separated from the respective end 120. The plug is then electrically disconnected from connector 100. To this end, end 120 may be metal plated with another conductive material like silver or gold.

End 122 is intended to electrically and mechanically fixedly connect busbar 118 to another electrical conductor 124 (Fig. 4-5) of connector 100. Herein, conductor 124 is a planar metal bar 124. Bar 124 has a rectangular cross section defining a planar upper face 126 on which is directly attached the end 122 of busbar 118 and an opposite planar lower face 128. End 122 is attached, without any degree of liberty, against upper face 126. Typically, end 122 is attached to the upper face 126 of bar 124 by a threaded fastener 132. Herein, threaded fastener 132 comprises a threaded nut 134, a hole 136 and a screw 138 (Fig. 5). Hole 136 fully crosses the thickness of end 122. Nut 134 is permanently fixed in front of hole 136. More precisely, nut 134 is fixed on the front face of end 122 that is opposite the front face of end 122 that is in direct contact with upper face 126. For example, nut 134 is soldered to the end 122. Screw 138 si for example a countersunk head cap screw. As shown in Fig. 5, the head of screw 138 has outer surfaces that are flush with the lower face 128 of bar 124 when screw 138 is fully tightened. This maximizes an interface surface area between end 122 and bar 124 that would be limited to the surface area of the screw head if the head was not flush with lower face 128 when screw 138 is fully tightened.

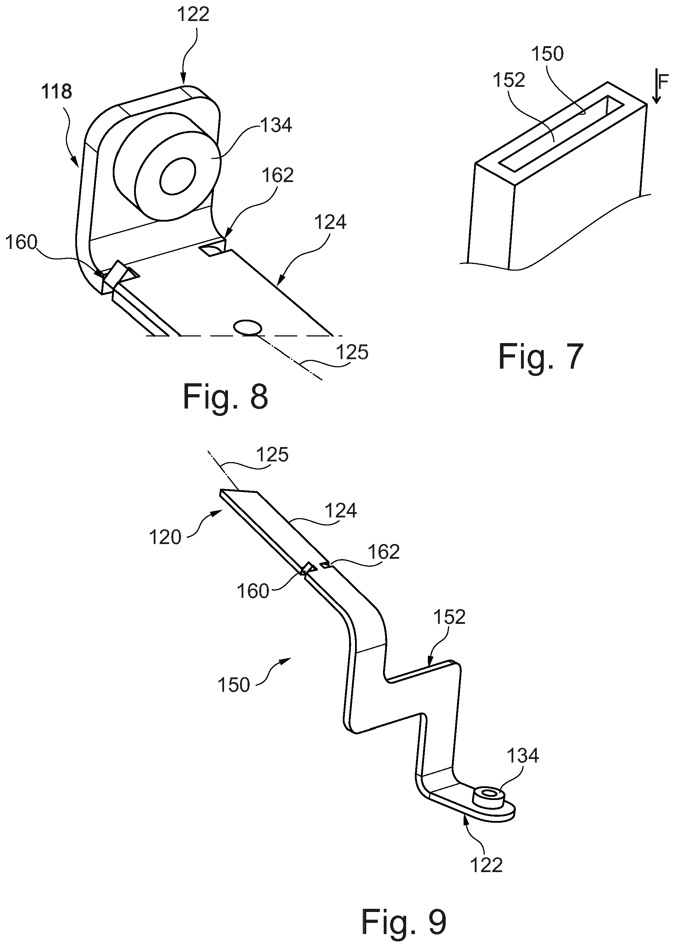

Straight portion 124 is intended to be inserted into a rectangular housing 150 (Fig. 7) of frame 112 by sliding portion 124 in an insertion direction illustrated in Fig. 5 - 7 by an arrow F. Housing 150 is shaped to receive and immobilize busbar 118 in frame 112 in directions perpendicular to the insertion direction F. In addition, housing 150 is shaped to allow the insertion of the straight portion 124 into housing 150 by sliding the portion 124 in the insertion direction F. To this end, housing 150 has a rectangular cross section which is constant in the insertion direction F. This constant rectangular cross section of housing 150 matches the cross section of the straight portion 124. Accordingly, the clearance between the face of straight portion 124 and the wall delimiting housing 150 is small, that is typically less than 1 mm and generally greater than 0,5 mm. The extremity of the wall delimiting housing 150 form an abutment face 152 (Fig. 7). Abutment face 152 is a planar face that fully surrounds the aperture of housing 150 by which portion 124 enters housing 150.

In this embodiment, straight portion 124 mainly extends along axis 125. During the insertion of portion 124 into housing 150, axis 125 is parallel to direction F.

Herein, the front faces of portion 124 are co-planar with the front faces of end 120.

In order to stop the insertion of straight portion 124 into housing 150 at the right position, portion 124 comprises two abutments 160 and 162 (Fig. 6 and 8). Abutments 160 and 162 comes into contact with abutment face 152 when portion 124 is inserted in housing 150.

Abutments 160, 162 are integrally formed with straight portion 124. Thus abutments 160, 162 are realized in copper in the embodiment. Preferably, the surface of the contact area between abutments 160, 162 and face 152 when portion 124 is inserted into housing 150 is greater than 1 mm² and, preferably, greater than 3 mm². Herein, the surface of the contact area between abutments 160, 162 and face 152 is comprised between 3 mm² and 4 mm². Such a choice of the surface of the contact area avoid that abutments 160, 162, which are in metal, cause damage to face 152 which is made of plastic.

Herein, abutment 160 protrudes only on one of the front face of straight portion 124 whereas abutment 162 protrudes only on the other opposite front face of straight portion 124. Thus, abutments 160, 162 do not protrude on any of the side face of straight portion 124. However, preferably, each abutment 160, 162 is located, as close as possible, from a respective side face of portion 124 in order not to increase too much the electrical resistivity of portion 124 in between abutments 160, 162. To this end, herein, abutments 160, 162 are located at the corner between the front faces and a respective side face of portion 124. Herein, each abutment 160, 162 opens on a respective side face of portion 124.

Herein, each abutment is a single leg cut in straight portion 124 and bent to protrude on one of the front face of portion 124. The leg mainly extends in a direction perpendicular to axis 125. Typically, each abutment 160, 162 is produced by stamping portion 124.

Fig. 9 shows a busbar 150 intended to be used in an electrical connector similar to connector 100. Busbar 150 is, for example, identical to busbar 118 except that in between the straight portion 124 and the mounting end 122, it comprises an additional linking portion 152. Linking portion 152 is integrally formed with straight portion 124 and the end 122. Linking portion 152 is designed to offset the mounting end 122 in a direction perpendicular to axis 125.

### Chapter III : Variants of the previous embodiments :

### The variants of the abutments :

Abutment 160, 162 may both protrude on the same front face of straight portion 124.

The abutment may be located at another place than at the corner between the front faces of portion 124 and a side face of portion 124. For example, the abutment can be located in the middle of the front face and does not open on a side face of portion 124.

In another embodiment, the leg of the abutment mainly extends in a direction parallel to the insertion direction. In such a case, it is the extremity of the leg that abuts against face 152. In such an embodiment, the surface of the contact area is reduced compared to the contact area surface obtained with the embodiment disclosed in chapter II.

The number of abutments produced in straight portion 124 to immobilize it at the right position within housing 150 may be greater than two or equal to one.

### The variants of the busbar :

Other conformation of busbar 118 or 150 are possible. For example, mounting end 122 may mainly extend along axis 125 so that the front faces and the side faces of end 122 are co-planar within the front faces and side faces of portion 124. In another embodiment, mounting end 122 mainly extends in a direction that makes an angle with axis 125 that is greater than 0° ou 10° and that is smaller than 90° or 85°. Other conformation of the linking portion 152 between straight portion 124 and mounting end 122 are also possible.

The width of the mounting end 122 may be smaller than the width of straight portion 124. However, the width of mounting end 122 is not to small in order to not excessively increase the electrical resistivity of end 122.

Busbar 118 may be made of other conductive material than copper. For example, busbar 118 is made of aluminium.

The plating of connection end 120 may be omitted.

Other fastening means than threaded fastener 132 can be used to mount end 122 on bar 124. For example, in an other embodiment, nut 134 is not permanently fixed on the end 122. In another embodiment, end 122 is directly soldered on upper face 126 and nut 134, hole 136 and screw 138 are omitted.

The fastening means of the end 122 of the busbar may also be designed to fixedly connect busbar 118 to another kind of electrical conductor than metal bar 124. For example, the fastening means can be designed to fixedly connect the end 122 to an electrical braid or an electrical terminal.

Several of the above disclosed variants may be combined together in the same embodiment of the busbar and of the connector.

### Chapter IV : Advantages of the disclosed embodiments :

In the disclosed embodiments, the each abutment 160, 162 is still integrally formed with straight portion 124. Thus, busbar 118 and 150 remain simple to manufacture. In addition, due to the fact that each abutment 160, 162 protrudes only on the front face of the straight portion and no more on the side face, the width of mounting end 122 can be equal or smaller than the width of straight portion 124. Thus, compared to the known busbar of Fig. 2, the amount of material used to manufacture the mounting end is reduced and the manufacturing cost of the connector is reduced.

The fact that the abutment is a leg cut in the straight portion and bent, simplify the manufacturing of the busbar.

The fact that the bent leg mainly extend in a direction perpendicular to the insertion direction make it possible to have a flat wide contact area between the busbar and the housing. Thus, this avoid that each abutment 160, 162, which is in metal, sinks into the abutment face 152 of housing 150.

The fact that there exists two abutments protruding on respective opposite front faces of the straight portion make it easier to obtain a flat contact area between the abutments and the housing which is greater than 1 mm².

The fact that the cross section of mounting end 122 is constant on the majority of its length simplifies the manufacturing of the busbar.

The fact that the cross section of mounting end 122 is identical to the cross section of straight portion 124 further simplifies the manufacturing of the busbar. In addition, it lower the electrical resistivity of the mounting end compared to the case where the width of the mounting end is smaller than the width of the straight portion.

## Claims

1. A busbar (118, 150) for the manufacturing of an electrical connector, wherein the busbar (118, 150) comprises:- a straight portion (124) that extends along a longitudinal axis (125), the straight portion having a constant rectangular cross section defining two opposed front faces and two opposed side faces; and- a mounting end (122) intended to electrically and mechanically connect the busbar (118, 150) to another electrical conductor, the mounting end (122) having a rectangular cross section and being integrally formed with the straight portion;-an abutment (160, 162) located on the straight portion (124) configured to stop, at the right position, the insertion of the straight portion (124) into a rectangular housing of the electrical connector, the abutment (160, 162) being integrally formed with the straight portion (124); **characterized in that**:- the abutment (160, 162) protrudes only on the front face of the straight portion (124); and- the width of the rectangular cross section of the mounting end (122) is equal to or smaller than the width of the rectangular cross section of the straight portion (124).

2. An electrical connector comprising:
- a busbar (118; 150) according to claim 1;
- a connector frame (112) having a rectangular housing (150) that extends in an insertion direction, the rectangular housing (150) having a constant cross section in the insertion direction that matches the cross section of the straight portion (124) to receive and immobilize the busbar (118, 150) in the connector frame (112) in directions perpendicular to the front and side faces while allowing the insertion of the straight portion (124) into the rectangular housing (150) by sliding the straight portion (124) in the insertion direction.

3. The electrical connector of claim 2, wherein the abutment (160, 162) comprises a leg cut in the straight portion (124) and bent to protrude on the front face of the straight portion (124).

4. The electrical connector according to claim 3, wherein the bent leg extends mainly in a direction perpendicular to the insertion direction.

5. The electrical connector according to anyone of the claims 2 - 4, in which the abutment is a first abutment (160) that protrudes on a first front face of the straight portion (124) and the busbar (118, 150) comprises a second abutment (162) identical to the first abutment (161) except that it protrudes on a second front face of the straight portion (124) opposite the first front face.

6. The electrical connector according to anyone of the claims 2 - 5, in which the rectangular cross section of the mounting end (122) is constant along the majority of its length.

7. The electrical connector according to claim 6, in which the width of the rectangular cross section of the mounting end (122) is equal to the width of the rectangular cross section of the straight portion (124).

8. The electrical connector according to anyone of the claims 2 - 7, in which the contact area between the abutment (160, 162) and the housing (150) is greater than 1 mm².

9. The electrical connector according to anyone of the claims 2 - 8, in which the mounting end (122) comprises a crossing hole (136) and the busbar (118; 150) comprises a nut (134), fixed without any degree of liberty, in front of the hole to form a threaded hole intended to receive a screw (138) that allows to fixedly connect the busbar onto an other electrical conductor.

10. The electrical connector according to anyone of the claims 2 - 9, in which the mounting end (122) extends in a direction perpendicular to the straight portion (124) to form a L-shaped busbar.

11. A vehicle (30) comprising :
- an electrical power source (32),
- an electrical appliance (34) powered by the electrical power source, and
- an electrical connector (100) to electrically connect the electrical appliance to the electrical power source,
wherein the electrical connector (100) is conformed to anyone of the claims 2 to 10.

## Patentansprüche

1. Eine Sammelschiene zur Herstellung eines Steckverbinders, wobei die Sammelschiene umfasst:
- einen geraden Abschnitt (124), der sich entlang einer Längsachse (125) erstreckt, wobei der gerade Abschnitt einen konstanten rechteckigen Querschnitt aufweist, der zwei gegenüberliegende Stirnflächen und zwei gegenüberliegende Seitenflächen definiert; und
- ein Befestigungsende (122), das dazu bestimmt ist, die Sammelschiene elektrisch und mechanisch mit einem anderen elektrischen Leiter zu verbinden, wobei das Befestigungsende einen rechteckigen Querschnitt aufweist und einstückig mit dem geraden Abschnitt ausgebildet ist;
- einen Anschlag (160, 162), der im geraden Abschnitt angeordnet ist, um das Einführen des geraden Abschnitts in das rechteckige Gehäuse eines elektrischen Steckverbinders an der richtigen Position zu stoppen, wobei der Anschlag einstückig mit dem geraden Abschnitt ausgebildet ist;
**dadurch gekennzeichnet, dass**:
- der Anschlag (160, 162) nur an der Vorderseite des geraden Abschnitts hervorsteht; und
- die Breite des rechteckigen Querschnitts des Befestigungsendes (122) gleich oder kleiner ist als die Breite des rechteckigen Querschnitts des geraden Abschnitts (124).

2. Elektrischer Steckverbinder, umfassend:
- eine Sammelschiene (118; 150) gemäß Anspruch 1;
- einen Steckverbinderrahmen (112) mit einem rechteckigen Gehäuse (150), das sich in einer Einführrichtung erstreckt, wobei das rechteckige Gehäuse (150) in der Einführrichtung einen konstanten Querschnitt aufweist, der dem Querschnitt des geraden Abschnitts (124) entspricht, um die Sammelschiene (118; 150) im Steckverbinderrahmen (112) in Richtungen senkrecht zur Vorder- und Seitenfläche zu fixieren, während das Einführen des geraden Abschnitts in das rechteckige Gehäuse (150) durch Verschieben des geraden Abschnitts (124) in Einführrichtung ermöglicht wird.

3. Elektrischer Steckverbinder nach Anspruch 2, wobei der Anschlag (160, 162) einen in den geraden Abschnitt (124) eingeschnittenen und so gebogenen Schenkel umfasst, dass er an der Vorderseite des geraden Abschnitts (124) hervorsteht.

4. Elektrischer Steckverbinder nach Anspruch 3, wobei sich der gebogene Schenkel hauptsächlich in einer Richtung senkrecht zur Einführrichtung erstreckt.

5. Elektrischer Steckverbinder nach einem der Ansprüche 2 bis 4, wobei der Anschlag ein erster Anschlag (160) ist, der an einer ersten Vorderseite des geraden Abschnitts (124) vorsteht und die Sammelschiene (118, 150) einen zweiten Anschlag (162) umfasst, der mit dem ersten Anschlag identisch ist, außer dass er an einer zweiten Vorderseite des geraden Abschnitts gegenüber der ersten Vorderseite vorsteht.

6. Elektrischer Steckverbinder nach einem der Ansprüche 2 bis 5, wobei der rechteckige Querschnitt des Befestigungsendes (122) über den größten Teil seiner Länge konstant ist.

7. Elektrischer Steckverbinder nach Anspruch 6, wobei die Breite des rechteckigen Querschnitts des Befestigungsendes (122) gleich der Breite des rechteckigen Querschnitts des geraden Abschnitts (124) ist.

8. Elektrischer Steckverbinder nach einem der Ansprüche 2 bis 7, wobei die Kontaktfläche zwischen dem Anschlag (160, 162) und dem Gehäuse (150) größer als 1 ^{mm²} ist.

9. Elektrischer Steckverbinder nach einem der Ansprüche 2 bis 8, wobei das Befestigungsende (122) eine Durchgangsbohrung (136) aufweist und die Sammelschiene (118; 150) eine Mutter (134) umfasst, die ohne jeglichen Freiheitsgrad vor der Bohrung befestigt ist, um eine Gewindebohrung zu bilden, die zur Aufnahme einer Schraube (138) bestimmt ist, die es ermöglicht, die Sammelschiene fest mit dem anderen elektrischen Leiter zu verbinden.

10. Elektrischer Verbinder nach einem der Ansprüche 2 bis 9, wobei sich das Befestigungsende (122) in einer Richtung senkrecht zum geraden Abschnitt (124) erstreckt, um eine L-förmige Sammelschiene zu bilden.

11. Ein Fahrzeug (30), umfassend:
- eine elektrische Energiequelle (32),
- ein elektrisches Gerät (34), das von der elektrischen Energiequelle gespeist wird, und
- einen elektrischen Steckverbinder (100) zum elektrischen Verbinden des elektrischen Geräts mit der elektrischen Stromquelle,
wobei der elektrische Steckverbinder (100) gemäß einem der Ansprüche 2 bis 10 ausgebildet ist.

## Revendications

1. Barre omnibus destinée à la fabrication d'un connecteur, dans laquelle la barre omnibus comprend :
- une partie droite (124) s'étendant le long d'un axe longitudinal (125), ladite partie droite présentant une section transversale rectangulaire constante définissant deux faces frontales opposées et deux faces latérales opposées ; et
- une extrémité de montage (122) destinée à relier électriquement et mécaniquement la barre omnibus à un autre conducteur électrique, l'extrémité de montage présentant une section transversale rectangulaire et étant formée d'un seul tenant avec la partie droite ;
- une butée (160, 162) située dans la partie droite pour arrêter, à la bonne position, l'insertion de la partie droite dans le logement rectangulaire d'un connecteur électrique, la butée étant formée d'un seul tenant avec la partie droite ;
**caractérisée en ce que** :
- la butée (160, 162) ne fait saillie que sur la face avant de la partie droite ; et
- la largeur de la section transversale rectangulaire de l'extrémité de montage (122) est égale ou inférieure à la largeur de la section transversale rectangulaire de la partie droite (124).

2. Connecteur électrique comprenant :
- une barre omnibus (118 ; 150) selon la revendication 1 ;
- un châssis de connecteur (112) comportant un logement rectangulaire (150) s'étendant dans une direction d'insertion, le logement rectangulaire (150) présentant une section transversale constante dans la direction d'insertion qui correspond à la section transversale de la partie droite (124) afin de recevoir et d'immobiliser la barre omnibus (118 ; 150) dans le châssis de connecteur (112) dans des directions perpendiculaires aux faces avant et latérales tout en permettant l'insertion de la partie droite dans le logement rectangulaire (150) par glissement de la partie droite (124) dans la direction d'insertion.

3. Connecteur électrique selon la revendication 2, dans lequel la butée (160, 162) comprend une patte découpée dans la partie droite (124) et pliée de manière à faire saillie sur la face avant de la partie droite (124).

4. Connecteur électrique selon la revendication 3, dans lequel la patte pliée s'étend principalement dans une direction perpendiculaire à la direction d'insertion.

5. Connecteur électrique selon l'une quelconque des revendications 2 à 4, dans lequel la butée est une première butée (160) qui fait saillie sur une première face avant de la partie droite (124) et la barre omnibus (118, 150) comprend une deuxième butée (162) identique à la première butée, à l'exception qu'elle fait saillie sur une deuxième face avant de la partie droite opposée à la première face avant.

6. Connecteur électrique selon l'une quelconque des revendications 2 à 5, dans lequel la section transversale rectangulaire de l'extrémité de montage (122) est constante sur la majeure partie de sa longueur.

7. Connecteur électrique selon la revendication 6, dans lequel la largeur de la section transversale rectangulaire de l'extrémité de montage (122) est égale à la largeur de la section transversale rectangulaire de la partie droite (124).

8. Connecteur électrique selon l'une quelconque des revendications 2 à 7, dans lequel la surface de contact entre la butée (160, 162) et le boîtier (150) est supérieure à 1 mm².

9. Connecteur électrique selon l'une quelconque des revendications 2 à 8, dans lequel l'extrémité de montage (122) comprend un trou traversant (136) et la barre omnibus (118 ; 150) comprend un écrou (134), fixé sans aucun degré de liberté, devant le trou pour former un trou fileté destiné à recevoir une vis (138) qui permet de relier de manière fixe la barre omnibus à l'autre conducteur électrique.

10. Connecteur électrique selon l'une quelconque des revendications 2 à 9, dans lequel l'extrémité de montage (122) s'étend dans une direction perpendiculaire à la partie droite (124) pour former une barre omnibus en forme de L.

11. Véhicule (30) comprenant :
- une source d'énergie électrique (32),
- un appareil électrique (34) alimenté par la source d'énergie électrique, et
- un connecteur électrique (100) destiné à relier électriquement l'appareil électrique à la source d'alimentation électrique,
dans lequel le connecteur électrique (100) est conforme à l'une quelconque des revendications 2 à 10.
